# EUROPEAN PATENT APPLICATION

(11) **EP 4 465 505 A1**
(43) Date of publication of application: **20.11.2024**
(21) Application number: 24153346.2
(22) Date of filing: 23.01.2024
(51) Int. Cl.: H02K 15/04, H02K 15/06

(54) **AUTOMATIC WIRE INSERTING DEVICE FOR PRODUCING A FLAT WIRE STATOR**

(30) Priority: 17.05.2023 CN 202310556845
(71) Applicant: UPTEC Intelligent Manufacturing (Wuxi) Co., Ltd., Wuxi City, Jiangsu Province 214000 (CN)
(72) Inventor: YE, Xin, 214000 Wuxi City, Jiangsu Province (CN); ZHOU, Liangliang, 214000 Wuxi City, Jiangsu Province (CN); TANG, Shang, 214000 Wuxi City, Jiangsu Province (CN); XU, Lei, 214000 Wuxi City, Jiangsu Province (CN); XU, Jianhai, 214000 Wuxi City, Jiangsu Province (CN)
(74) Representative: Longoni, Alessandra

(57) **Abstract**

The present invention relates to an automatic wire inserting device for producing a flat wire stator, which includes: a winding displacement tooling, configured for winding displacement of flat wires; a material loading mechanism, configured to load the flat wires one by one; a material transfer mechanism, configured to: clamp the flat wires loaded by the material loading mechanism one by one, and arrange the flat wires on the winding displacement tooling one by one; two wire coiling mechanisms, configured to wind the flat wires on the winding displacement tooling into windings; a wire body, configured to: drive the winding displacement tooling to circularly move between a wire coiling mechanism and the material transfer mechanism, to convey the winding displacement tooling on which the flat wires are arranged to the wire coiling mechanism, and move the winding displacement tooling on which winding of the flat wires are completed by using the wire coiling mechanism to the material transfer mechanism; and a wire inserting mechanism, configured to: shape a winding that is detached from the wire coiling mechanism and eject the shaped winding to be inserted into a stator. The present invention is characterized with an advantage of improved wire inserting efficiency.

## Description

### FIELD OF TECHNOLOGY

The present invention belongs to the technical field of an automatic wire inserting device for a flat wire stator, and in particular, to an automatic wire inserting device for producing a flat wire stator.

### BACKGROUND

A hairpin permanent magnet synchronous motor (hairpin motor) is increasingly used in the domestic drive motor market in a large scale. Compared with a traditional wire-winded motor, because a hairpin flat wire is flat, at a same power, the motor has a smaller volume and higher power efficiency, which is a development direction of a next-generation new-energy driving motor. During production of the hairpin generator, a winding is usually embedded into a stator slot through insertion.

In the conventional technologies, automatic wire inserting of the winding is mostly implemented by using an automatic wire inserting device. However, before wire inserting, a flat wire needs to be loaded, transferred, and winded to form the winding. However, an existing automatic wire inserting device cannot automatically load, transfer, and wind the flat wire, so that wire inserting efficiency of the automatic wire inserting device is relatively low.

### SUMMARY

The present invention is intended to provide an automatic wire inserting device for producing a flat wire stator with improved wire inserting efficiency, to overcome shortcomings of existing technologies.

The technical solutions of the present invention are as follows.

An automatic wire inserting device for producing a flat wire stator is provided, including:
a winding displacement tooling, configured for winding displacement of flat wires;
a material loading mechanism, configured to load the flat wires one by one;
a material transfer mechanism, configured to: clamp the flat wires loaded by the material loading mechanism one by one, and arrange the flat wires on the winding displacement tooling one by one;
two wire coiling mechanism, configured to wind the flat wires on the winding displacement tooling into windings;
a wire body, configured to: drive the winding displacement tooling to circularly move between a wire coiling mechanism and the material transfer mechanism, to convey the winding displacement tooling on which the flat wires are arranged to the wire coiling mechanism, and move the winding displacement tooling on which winding of the flat wires are completed by using the wire coiling mechanism to the material transfer mechanism; and
a wire inserting mechanism, configured to: shape a winding that is detached from the wire coiling mechanism and eject a shaped winding to be inserted into a stator; and two mechanical arms, configured to: move the two wire coiling mechanisms alternately to the wire inserting mechanism, insert a winding on the wire coiling mechanism into the wire inserting mechanism, and the mechanical arm restores the wire coiling mechanism to a side of the wire body after the winding is separated, so that the wire coiling mechanism can rewind the flat wires.

Further, the winding displacement tooling includes a tray plate and a winding displacement plate disposed on an upper side of the tray plate and configured to place multiple flat wires, both sides of the winding displacement plate are provided with a baffle plate slidably connected to the tray plate, and a side that is of the baffle plate and that is opposite to the winding displacement plate is provided with a second cylinder, the second cylinder is capable of driving the baffle plate to move toward the winding displacement plate, to align the flat wires.

Further, the material loading mechanism includes multiple material loading parts that can generate vibration, and multiple material transfer parts, the material loading parts are tilted up and down, and the material transfer parts are located on a side on which the material loading parts are tilted downward in a tilting direction, a material holder and two clamping assemblies are disposed on the material transfer part, and the material holder is located on a side between the two clamping assemblies, the flat wires are hung on the material loading parts, and the material loading parts are capable of loading the flat wires to the material transfer parts one by one, the material transfer parts are capable of transferring the flat wires to a position between the two clamping assemblies, the clamping assemblies clamp the flat wires and drive the flat wires to rotate, so that the flat wires are horizontally placed on the material holder. Further, the material transfer mechanism includes a material transfer support, a sliding plate slidably connected to the material transfer support, a first motor disposed on the sliding plate, a mechanical swing arm disposed on a lower side surface of the sliding plate, and a cylinder clamping jaw disposed on the mechanical swing arm. The cylinder clamping jaw is disposed above the wire body, a sliding direction of the sliding plate is the same as a winding displacement direction of the winding displacement tooling, a rack on the material transfer support is disposed on one side of the sliding plate, and a drive gear meshing with the rack is disposed on the first motor.

Further, the wire coiling mechanism includes a winding mechanism and a flat wire conveying mechanism;
the wire body conveys the winding displacement tooling to the winding mechanism; and
the flat wire conveying mechanism is configured to convey, to the winding mechanism for winding, flat wires arranged on the winding displacement tooling conveyed to the winding mechanism.

Further, the wire body includes a wire body in a material loading region, a wire body in a material feeding region disposed in parallel with the wire body in the material loading region, and a first movable wire body and a second movable wire body that are disposed on left and right ends of the wire body in the material loading region. Bottoms of both the first movable wire body and the second movable wire body are provided with sliding assemblies that slide in a longitudinal direction, to drive the first movable wire body and the second movable wire body to be aligned with the wire body in the material loading region and the wire body in the material feeding region. The wire body in the material loading region penetrates a material transfer support and is located below a cylinder clamping jaw, and the wire coiling mechanism is disposed on a side of the wire body in the material feeding region.

The winding displacement tooling is disposed on the wire body in the material loading region, the wire body in the material feeding region, the first movable wire body, and the second movable wire body.

Further, the wire inserting mechanism includes a workbench, a movable plate that is capable of being lifted and lowered on the workbench, a press-in assembly disposed on the movable plate, and a positioning assembly and a detaching assembly that are located above the workbench. Both the positioning assembly and the detaching assembly are located below the press-in assembly, the detaching assembly is disposed coaxially with the positioning assembly, and a winding on the wire coiling mechanism penetrates the press-in assembly and is inserted into the detaching assembly. When the winding is detached from the wire coiling mechanism, the press-in assembly presses the winding into the detaching assembly, and the detaching assembly moves upward, so that the positioning assembly is capable of positioning the winding, and then the detaching assembly moves downward, so that the winding is detached from the detaching assembly.

Further, the press-in assembly includes a first cylinder and a second cylinder that are disposed on the movable plate, and a first compressing plate and a second compressing plate that are slidably disposed on the movable plate. The first compressing plate and the second compressing plate are respectively connected to the first cylinder and the second cylinder, to drive the first compressing plate and the second compressing plate to move toward each other or away from each other, the movable plate is slidably disposed on the workbench, and the movable plate is provided with a synchronous lifter that is located on the workbench.

Further, the positioning assembly includes a movable support disposed on the workbench, a fastening tray on the movable support, a rotating plate rotatably disposed on the fastening tray, gear teeth circularly arrayed on an upper side surface of the rotating plate with a shaft center of the rotating plate as the center of a circle, and a cover plate disposed above the rotating plate, the fastening tray is connected to a third cylinder on the workbench, the rotating plate, the cover plate, and the fastening tray are coaxially disposed, and are provided with through holes through which the detaching assembly penetrates.

A rack is disposed on a circumferential side surface of the rotating plate, the rack meshes with a gear, the gear is connected to a second motor located on the fastening tray, arc-shaped sliding grooves whose quantity is the same as a quantity of the gear teeth are disposed on an upper side surface of the rotating plate, the arc-shaped sliding grooves are circularly arrayed on the rotating plate with the shaft center of the rotating plate as the center of a circle, and the gear teeth are slidably connected to an inside of the arc-shaped sliding groove.

A lower side surface of the cover plate is provided with multiple grooves that cooperate with the gear teeth one by one, and the cover plate is fastened to the fastening tray.

Further, the detaching assembly includes a movable wire inserting tray, a positioning workpiece disposed below the movable wire inserting tray, a fastening plate located below the positioning workpiece, a second top rod slidably penetrating the positioning workpiece and connected to the movable wire inserting tray, a first top rod penetrating the fastening plate and connected to the second top rod, and a fourth cylinder connected to the first top rod, the fourth cylinder is connected to the fastening plate, the fastening plate is connected to the positioning workpiece, and the positioning workpiece is connected to the workbench.

Compared with the prior art, the present invention has the following beneficial effects.
1. According to the present invention, the flat wires are loaded one by one by using the material loading mechanism, the material transfer mechanism arranges the flat wires on the material loading mechanism to the winding displacement tooling, and the winding displacement tooling is conveyed by using the wire body, thereby facilitating loading, arrangement, and conveying of the flat wires.
2. According to the present invention, the flat wires are alternately winded by using the two wire coiling mechanisms, the winding on the winding mechanism is detached by using the wire inserting mechanism, a leaked winding is held by using an external mechanism, and the winding is held and entirely inserted into a stator, to implement automatic wire inserting of the stator.
3. According to the present invention, the second motor drives the rotating plate to rotate, so that the gear teeth slide along the arc-shaped sliding groove, to clamp and position a lower end of the winding, and the fourth cylinder drives the movable wire inserting tray to move downward, to help detach the winding from the detaching assembly.
4. According to the present invention, a material shortage alarm, a material adding alarm, and material filling alarm implement alarms in three states for material shortage, material adding, and material filling, to help prompt a person for adding and stopping adding a material in time.
5. According to the present invention, with the cooperation of the first motor, the rack, and the gear, the mechanical swing arm is moved in a left-right direction, to help place the flat wires into different wire slots.

In summary, the present invention is characterized with an advantage of improved wire inserting efficiency.

### BRIEF DESCRIPTION OF THE DRAWINGS

FIG. 1 is a schematic structural diagram of the present invention;
FIG. 2 is a schematic structural diagram of a material transfer mechanism in FIG. 1 of the present invention;
FIG. 3 is a schematic structural diagram of a wire inserting mechanism in FIG. 1 of the present invention;
FIG. 4 is a schematic structural diagram of a wire inserting mechanism in FIG. 3 of the present invention;
FIG. 5 is a schematic structural diagram of a detaching assembly and a positioning assembly in FIG. 4 of the present invention;
FIG. 6 is a schematic structural diagram of the detaching assembly in FIG. 5 the present invention;
FIG. 7 is a schematic structural diagram of the detaching assembly in FIG. 2 the present invention;
FIG. 8 is a schematic structural diagram of a rotating plate and a gear teeth part in FIG. 5 of the present invention;
FIG. 9 is a schematic structural diagram of a winding displacement tooling in FIG. 1 of the present invention;
FIG. 10 is a schematic structural diagram of a tray assembly and a lifting assembly in FIG. 9 of the present invention;
FIG. 11 is a schematic structural diagram of a tray assembly and an adjustment assembly in FIG. 1 of the present invention;
FIG. 12 is a schematic structural diagram of a material loading mechanism in FIG. 1 of the present invention;
FIG. 13 is a schematic structural diagram of a material loading part in FIG. 12 of the present invention;
FIG. 14 is a schematic diagram of a position of a first cylinder and a top post in FIG. 13 of the present invention;
FIG. 15 is a schematic structural diagram of a material transfer part in FIG. 12 of the present invention;
FIG. 16 is a schematic structural diagram of a back side structure in FIG. 15 of the present invention;
FIG. 17 is a schematic structural diagram of a clamping assembly in FIG. 12 of the present invention;
FIG. 18 is a schematic structural diagram of a material support rod and a material compressing rod in FIG. 13 of the present invention;
FIG. 19 is a schematic three-dimensional diagram of a structure of a wire coiling mechanism of the present invention;
FIG. 20 is a schematic three-dimensional diagram of a combination state of a cable routing part and a conducting wire part in the present invention;
FIG. 21 is a schematic three-dimensional diagram of a combination state of a winding displacement tooling, a wire coiling part, a wire movement assembly, and a conducting wire block in the present invention;
FIG. 22 is a schematic three-dimensional diagram of a wire coiling part in the present invention;
FIG. 23 is a schematic three-dimensional diagram of a wire-holding assembly in the present invention;
FIG. 24 is a schematic three-dimensional diagram of a combination state of a winding assembly and a cover plate in the present invention;
FIG. 25 is a schematic three-dimensional diagram of a state in which an umbrella-shaped member and an insert are separated from a sleeve in the present invention;
FIG. 26 is a schematic sectional view of a three-dimensional part of a locking assembly in the present invention;
FIG. 27 is a schematic three-dimensional diagram of a lifting part in the present invention;
FIG. 28 is a schematic three-dimensional diagram of a positioning part in the present invention; and
FIG. 29 is a schematic three-dimensional diagram of a separation structure between a hollow speed reducer, a sleeve, and a servo motor in the present invention.

In the drawings, 1, wire coiling mechanism; 110, fastening support; 1101, sliding groove; 1102, servo motor; 113, hollow speed reducer; 13, cable routing part; 130, first assembly base; 131, first cylinder; 132, second cylinder; 133, wire movement assembly; 134, sliding plate; 135, first baffle plate; 136, first motor; 137, conveying belt; 14, conducting wire part; 140, second assembly base; 141, third cylinder; 142, conducting wire block; 143, fourth cylinder; 15, wire coiling part; 150, first mounting base; 151, fifth cylinder; 152, fourth driving mechanism; 153, slot; 154, sliding base; 155, winding assembly; 156, rotating shaft; 157, sleeve; 158, insert; 159, umbrella-shaped member; 16, lifting part; 160, sliding rail; 161, first sliding plate; 162, horizontally disposed plate; 163, positioning rod; 164, first rack; 165, third motor; 166, first gear; 167, sixth cylinder; 17, positioning part; 170, first fastening plate; 171, seventh cylinder; 172, eighth cylinder; 173, movable block; 174, alignment block; 18, wire-holding assembly; 180, first base; 181, tenth cylinder; 182, eleventh cylinder; 183, first swing arm; 184, second swing arm; 185, driving gear; 186, driven gear; 187, belt; 19, locking assembly; 190, ninth cylinder; 191, steel ball; 192, adapter; 193, sliding sleeve; 2, material transfer mechanism; 21, material transfer support; 22, cylinder clamping jaw; 23, mechanical swing arm; 24, second sliding plate; 25, fourth motor; 26, second rack; 3, material loading mechanism; 31, material loading part; 311, vibrator; 312, material compressing rod; 313, material filling alarm; 314, material support rod; 315, base; 316, support; 317, base plate; 318, twelfth cylinder; 319, material adding alarm; 3110, material shortage alarm; 3111, material stopper; 3112, first top post; 32, material transfer part; 321, support base; 322, material hanging block; 323, slider; 324, thirteenth cylinder; 33, second base; 34, clamping assembly; 341, connection plate; 342, fifth motor; 343, fourteenth cylinder; 344, wire clamping block; 35, material holder; 4, first movable wire body; 5, camera detection mechanism; 6, wire body in a material feeding region; 7, wire inserting mechanism; 71, workbench; 72, movable plate; 73, press-in assembly; 731, fifteenth cylinder; 732, sixteenth cylinder; 733, first compressing plate; 734, second compressing plate; 74, synchronous lifter; 75, detaching assembly; 751, movable wire inserting tray; 752, second fastening plate; 753, seventeenth cylinder; 754, positioning workpiece; 755, second top rod; 756, first top rod; 76, positioning assembly; 761, movable support; 762, second motor; 763, gear; 764, rotating plate; 765, third rack; 766, gear teeth; 767, eighteenth cylinder; 768, cover plate; 769, fastening tray; 760, arc-shaped sliding groove; 8, mechanical arm; 9, second movable wire body; 10, wire body in a material loading region; 101, sliding belt; 11, winding displacement tooling; 111, winding displacement plate; 112, tray assembly; 1121, second top post; 1122, tray plate; 1123, second baffle plate; 1124, protrusion; 114, adjustment assembly; 1141, compressing block; 1142, nineteenth cylinder; 1143, twentieth cylinder; 1144, support frame; 1145, abutting block; 115, third base; 116, lifting assembly; 1161, twenty-first cylinder; 1162, second mounting base; 1163, horizontal plate; 1164, top plate; 1165, positioning post.

### DESCRIPTION OF THE EMBODIMENTS

The following clearly and completely describes technical solutions in embodiments of the present invention with reference to accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention as claimed.

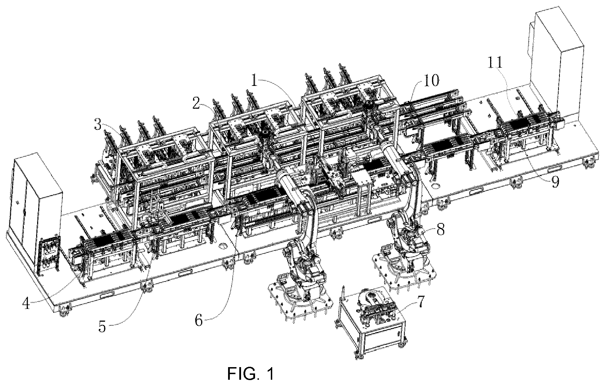

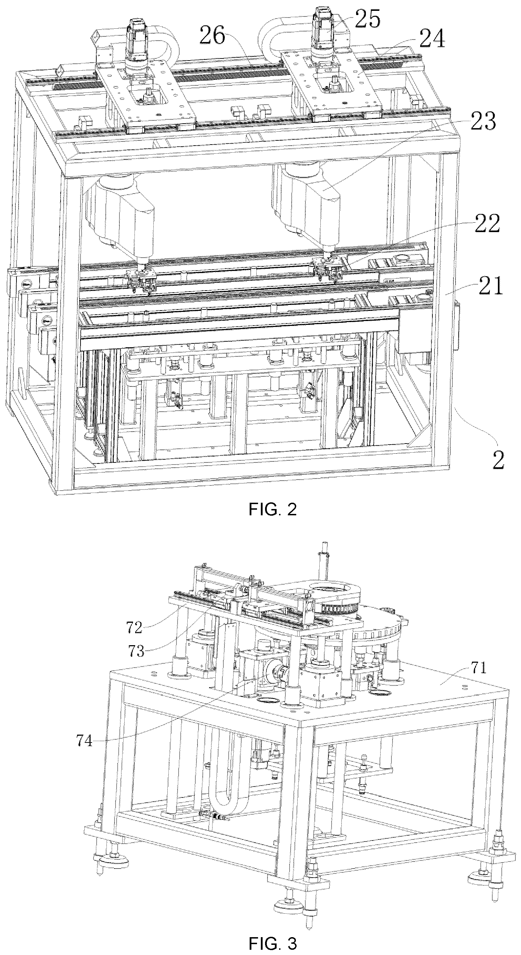

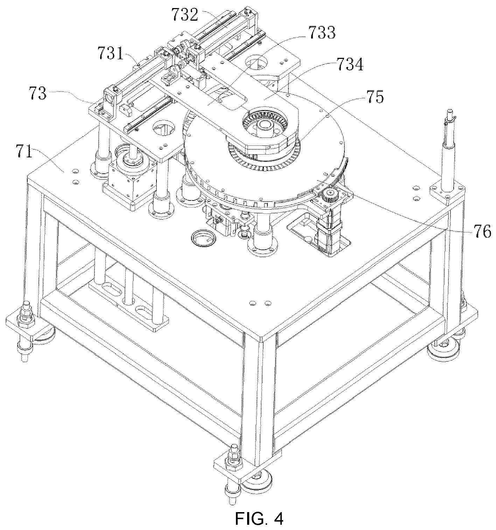

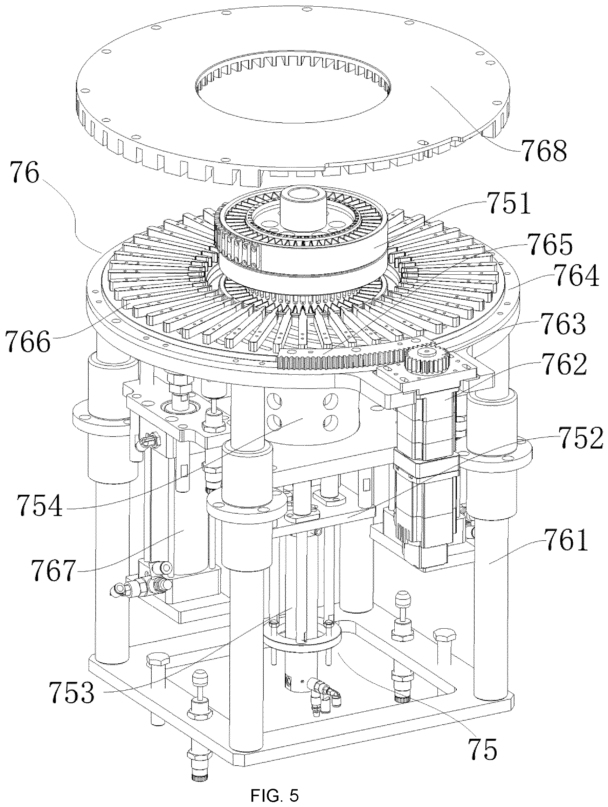

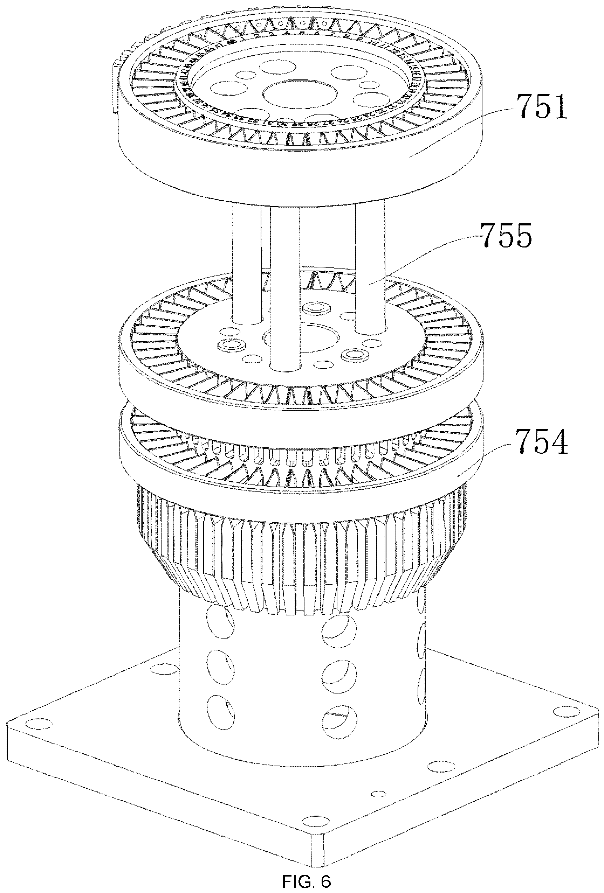

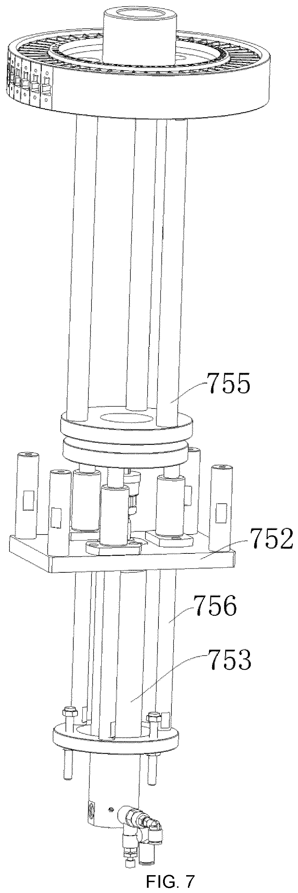

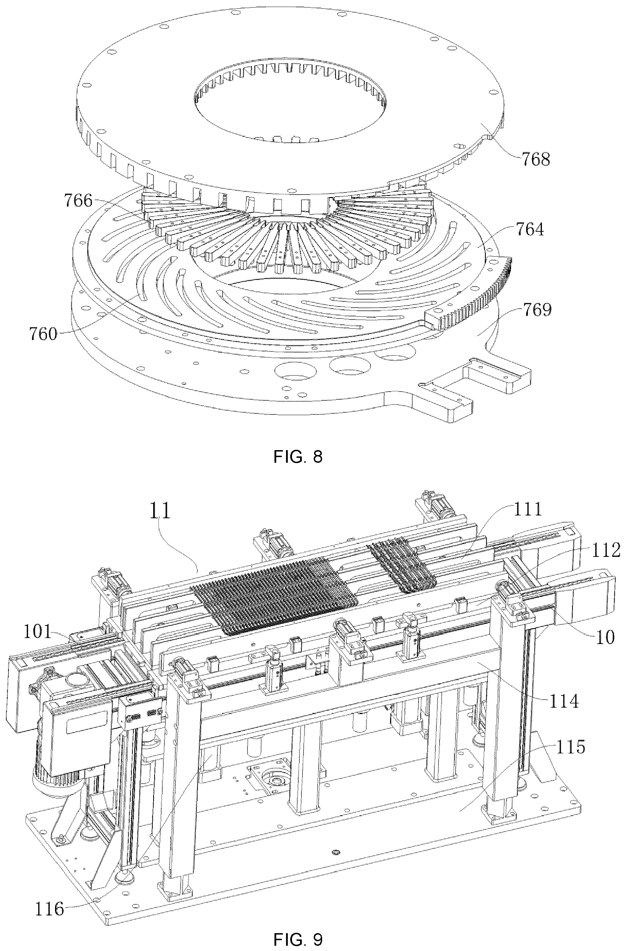

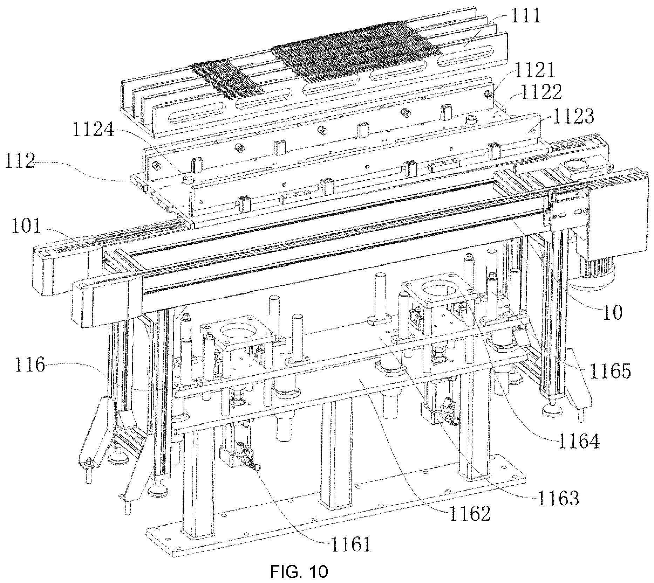

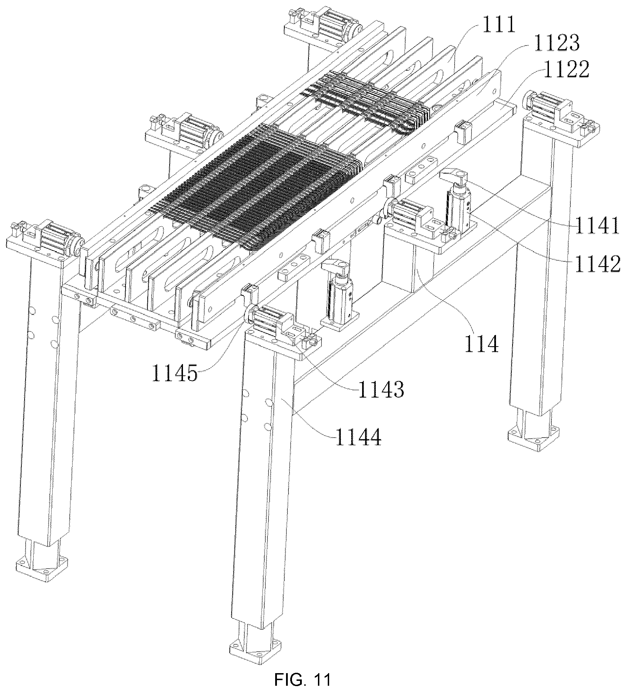

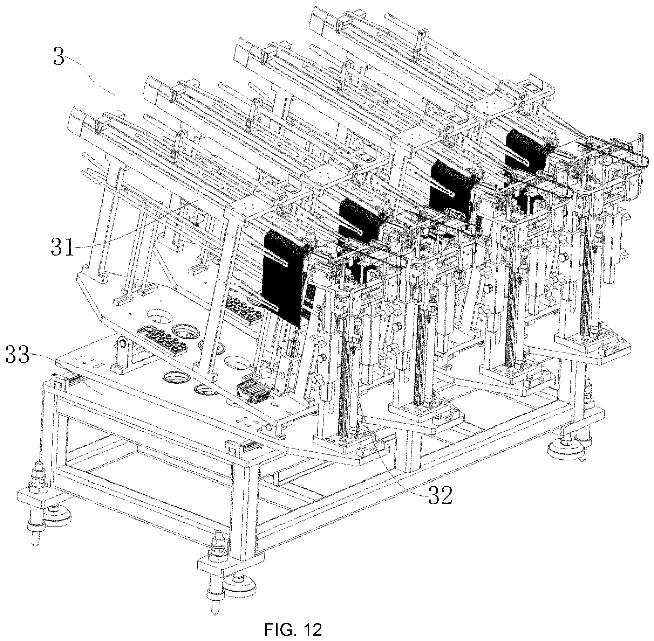

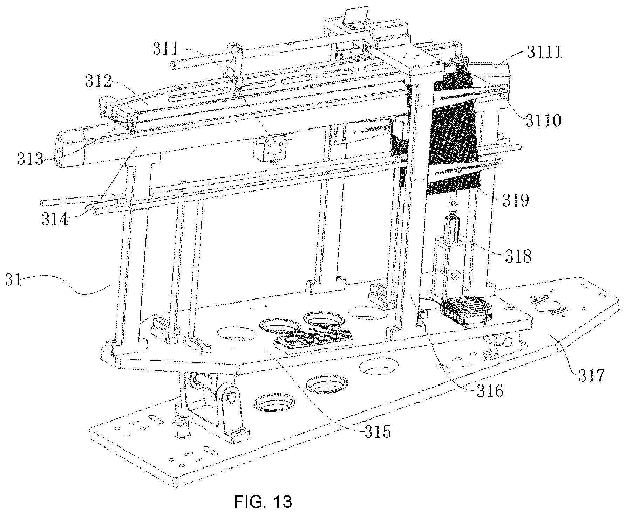

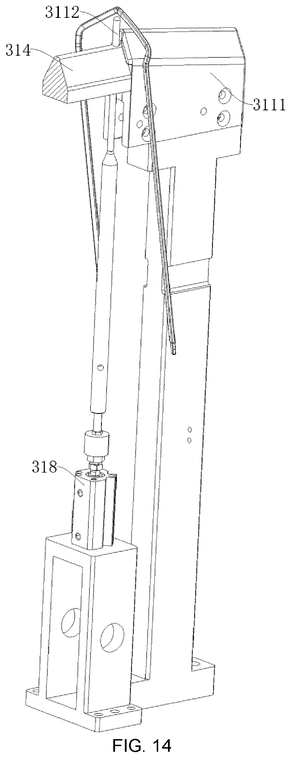

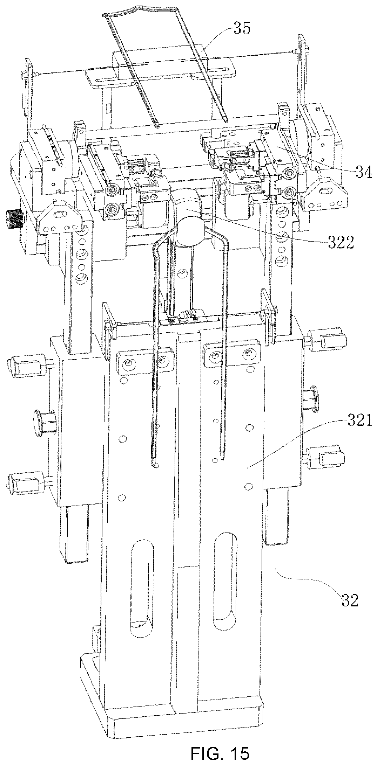

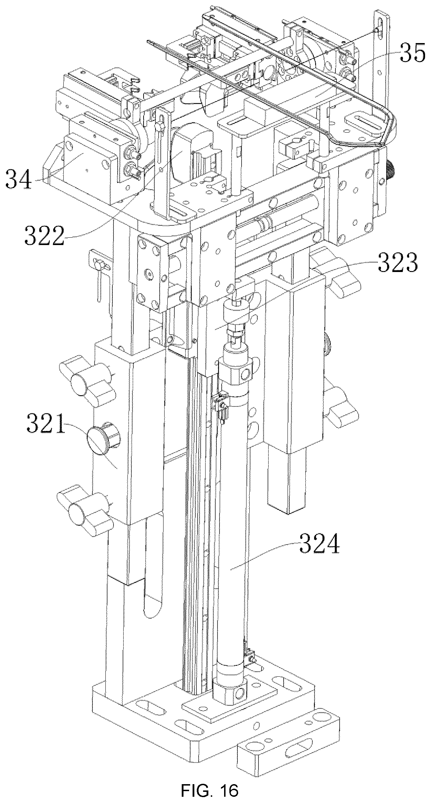

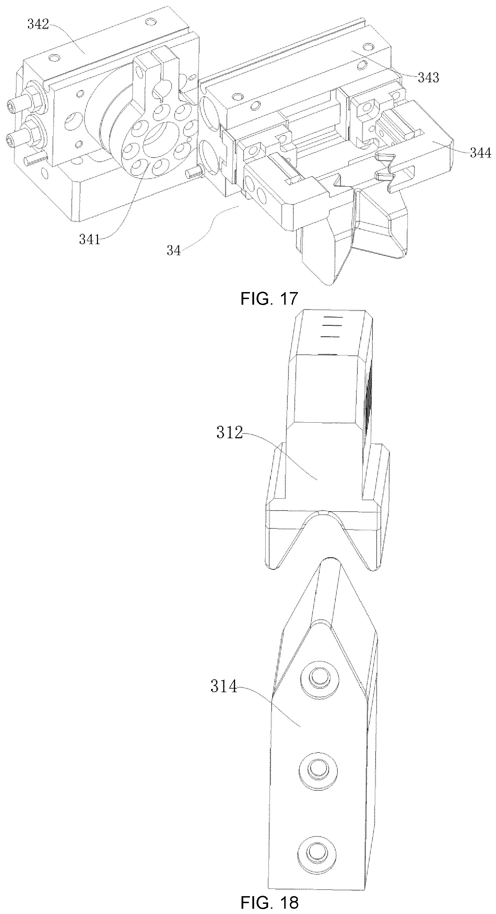

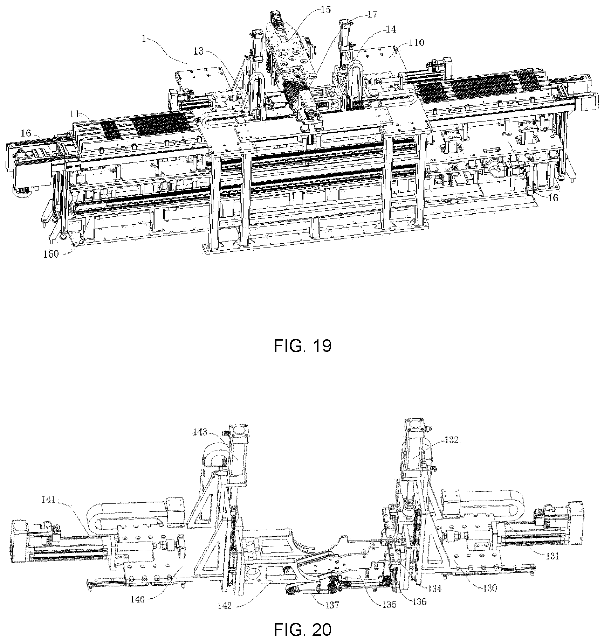

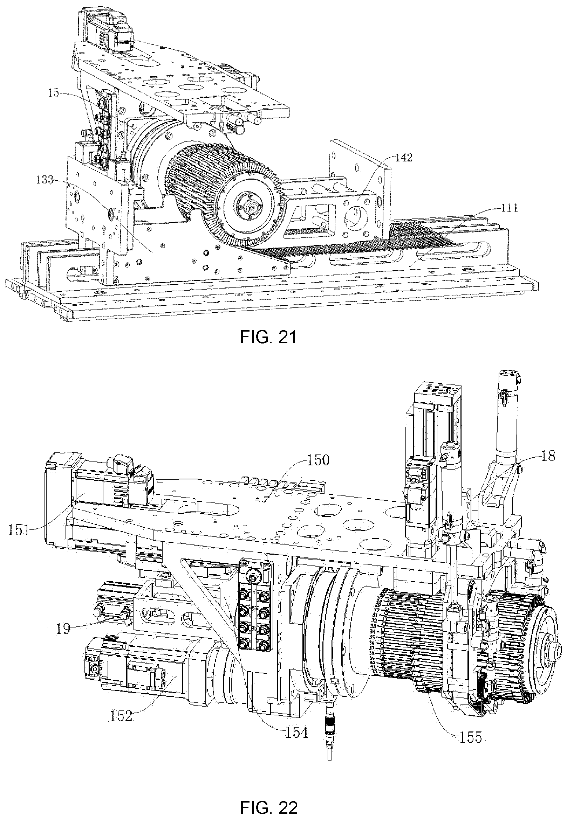

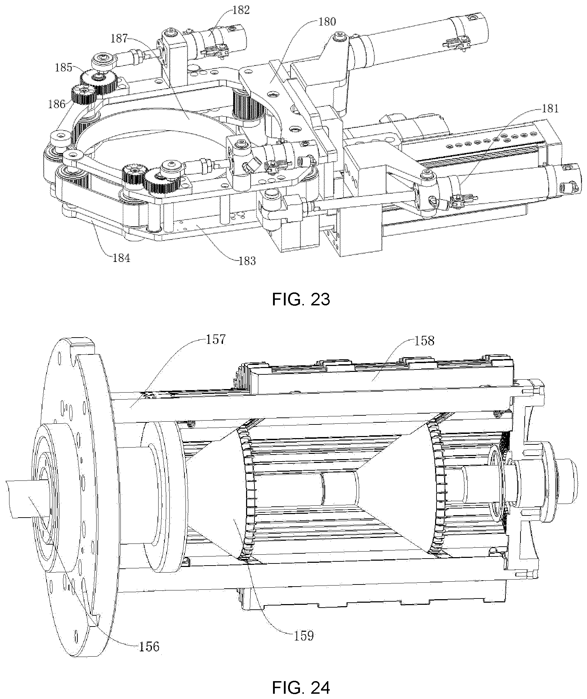

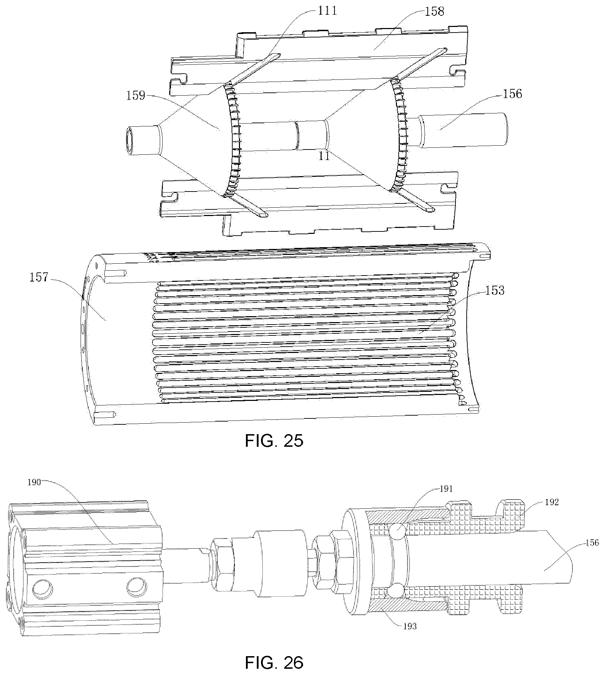

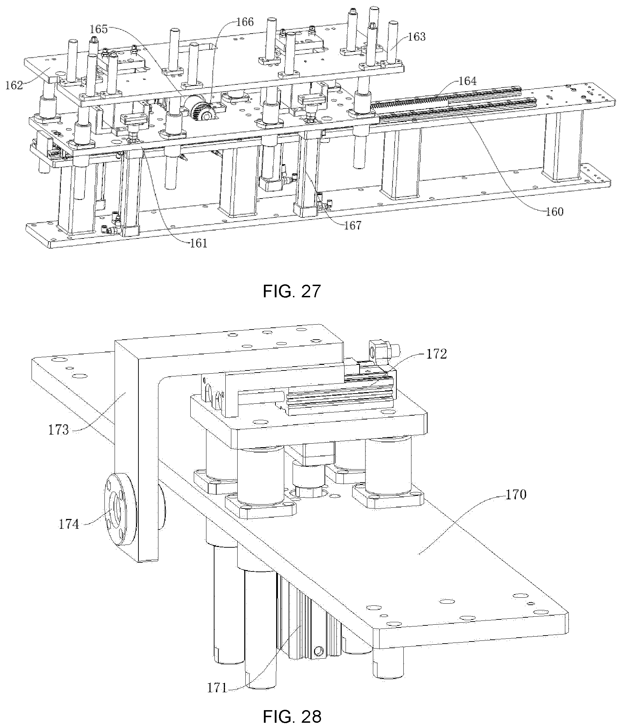

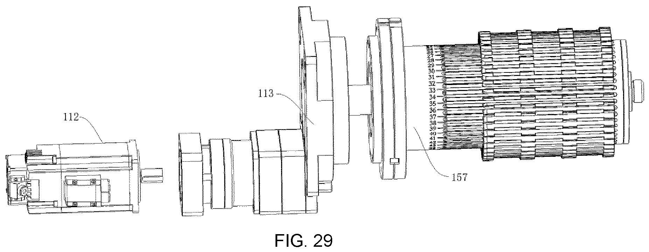

FIG. 1 to FIG. 29 show an automatic wire inserting device for producing a flat wire stator, including:
a winding displacement tooling 11, configured for winding displacement of flat wires;
a material loading mechanism 3, configured to load the flat wires one by one;
a material transfer mechanism 2, configured to: clamp the flat wires loaded by the material loading mechanism 3 one by one, and arrange the flat wires on the winding displacement tooling 11 one by one;
two wire coiling mechanisms 1, configured to coil the flat wires on the winding displacement tooling 11 into windings;
a wire body, configured to drive the winding displacement tooling 11 to circularly move between a wire coiling mechanism 1 and the material transfer mechanism 2, to convey the winding displacement tooling 11 on which the flat wires are arranged to the wire coiling mechanism 1, and to move the winding displacement tooling 11 on which winding of the flat wires are completed to the material transfer mechanism 2;
a wire inserting mechanism 7, configured to shape a winding that is detached from the wire coiling mechanism 1 and eject a shaped winding to be inserted into a stator; and
two mechanical arms 8, configured to move the two wire coiling mechanisms 1 alternately to the wire inserting mechanism 7, to insert a winding on the wire coiling mechanism 1 into the wire inserting mechanism 7; the mechanical arm 8 restores the wire coiling mechanism 1 to a side of the wire body after the winding is separated, so that the wire coiling mechanism 1 can rewind the flat wires.

In use, the flat wires are hung on the material loading mechanism 3. The material loading mechanism 3 places the flat wires horizontally one by one, and then the material transfer mechanism 2 clamps and arranges the horizontally placed flat wires onto the winding displacement tooling 11. After the flat wires are arranged on the winding displacement tooling 11, the wire body moves the winding displacement tooling 11 to the wire coiling mechanism 1. The wire coiling mechanism 1 coils the flat wires on the winding displacement tooling 11 into windings. The mechanical arm 8 moves the wire coiling mechanism 1 with the coiled windings to a position above the wire inserting mechanism 7 so as to be inserted into the wire inserting mechanism 7. The wire inserting mechanism 7 shapes and detaches the winding on the wire coiling mechanism 1, then a leaked winding is held by using an external mechanism. Gear teeth 766 are loosened, and the winding is held and inserted into the stator. The wire coiling mechanism 1 with the winding detached is moved by the mechanical arm 8 to one side of the wire body, and the other wire coiling mechanism 1 is inserted and connected to the wire inserting mechanism 7 by the mechanical arm 8.

The winding displacement tooling 11 is transferred to the material transfer mechanism 2 through the wire body after the flat wires are coiled by wire coiling mechanism 1, and is loaded again.

In this embodiment, the winding displacement tooling 11 includes a tray assembly 112 and a winding displacement plate 111 that is configured to arrange multiple flat wires. The winding displacement plate 111 is located on the tray assembly 112, and adjustment assemblies 114 are disposed on both sides of the tray assembly 112. The adjustment assemblies 114 may push the tray assembly 112 to contact the flat wires on the winding displacement plate 111, so that the flat wires are aligned with each other.

In use, flat wires of different specifications are arranged on the winding displacement plate 111 according to requirements for coiling, and the adjustment assemblies push the tray assembly 112 to contact the flat wires on the winding displacement plate 111, until two ends of the flat wire are aligned with each other. Then, the adjustment assembly is reset, and the tray assembly 112 is reset to no longer contact the flat wires, to facilitate subsequent coiling.

In this embodiment, the winding displacement plate 111 includes one bottom side plate and multiple vertical plates. The multiple vertical plates are fastened to the bottom side plate. A front and back of the vertical plate are arranged on the bottom side plate, and side faces of the vertical plate are parallel. An interval is provided between adjacent vertical plates for the wire coiling mechanism 1 to coil a wire. Multiple wire slots for arranging flat wires are provided on a side face of the vertical plate, and a shape and a quantity of the wire slots may be processed according to production requirements.

In this embodiment, the tray assembly 112 includes a tray plate 1122, two second baffle plates 1123, and multiple second top posts 1121 fastened to opposite sides of the two second baffle plates 1123 by using bolts. The second top posts 1121 are specifically elastic telescopic rods. A sliding connection between the second baffle plates 1123 and the tray plate 1122 may be implemented by using a guide rail and a sliding groove, or may be implemented in another manner of sliding connection, so that the second baffle plates 1123 can be moved toward the winding displacement plate 111. The winding displacement plate 111 is located on the tray plate 1122, and the second baffle plates 1123 are located on two sides of the winding displacement plate 111.

In use, the second top post 1121 contacts the winding displacement plate 111. When two ends of the flat wire need to be aligned, the adjustment assembly 114 pushes the second baffle plate 1123 to move toward the winding displacement plate 111. In this case, the second top post 1121 is squeezed. When the second baffle plate 1123 contacts the two ends of the flat wire, the second baffle plate 1123 is continuously moved until the two ends of the flat wire are aligned with each other, and then the adjustment assemblies 114 are reset, and the second top post 1121 pushes the second baffle plate 1123 to reset.

In this embodiment, multiple protrusions 1124 are fastened on an upper side of the tray plate 1122 by using bolts, and holes for inserting the protrusions 1124 are provided at the winding displacement plate 111. Limiting of the tray plate 1122 and the winding displacement plate 111 is implemented through cooperation of the protrusions 1124 with the holes at the winding displacement plate 111.

In this embodiment, the adjustment assembly 114 includes two support frames 1144, a twentieth cylinder 1143 and a nineteenth cylinder 1142 that are fastened to the support frames 1144 by using bolts. A third base 115 is disposed below the tray plate 1122, and the two support frames 1144 are fastened to the third base 115 by using a bolt.

The twentieth cylinder 1143 is fastened to an abutting block 1145 located on one side, away from the winding displacement plate 111, of the second baffle plate 1123. The twentieth cylinder 1143 pushes the second baffle plate 1123 to move toward the winding displacement plate 111 through the abutting block 1145.

The nineteenth cylinder 1142 is fastened to a compressing block 1141 located above the tray plate 1122.

A lifting assembly 116 is disposed below the wire body. The lifting assembly 116 includes a second mounting base 1162 fastened to the third base 115 by using three support posts, a twenty-first cylinder 1161 fastened to a second mounting base 1162 by using a bolt, a horizontal plate 1163 located above the second mounting base 1162, and a positioning post 1165 and a top plate 1164 that are located on a side surface of the horizontal plate 1163. A hole is provided at the second mounting base 1162. An output shaft of the twenty-first cylinder 1161 is connected to the horizontal plate 1163 through a through hole. The positioning post 1165 is fastened to the horizontal plate 1163 by using a bolt, and the top plate 1164 is fastened to the horizontal plate 1163 by using a connecting rod. The twenty-first cylinder 1161 may push the top plate 1164 upward to penetrate the wire body and contact the tray plate 1122. The tray plate 1122 is provided with a through hole. When the top plate 1164 contacts the tray plate 1122, the positioning post 1165 is inserted into the through hole.

In use, the wire body moves the tray plate 1122 and the winding displacement plate 111 to a position between the support frames 1144, and the twenty-first cylinder 1161 pushes the horizontal plate 1163 upward, so that the top plate 1164 can push the tray plate 1122 upward to be detached from the wire body. In addition, the positioning post 1165, disposed on the horizontal plate 1163, is inserted into a through hole at a position corresponding to the tray plate 1122, so as to position the tray plate 1122, and a nineteenth cylinder 1142, in the adjustment assembly 114, drives the compressing block 1141 to compress the tray plate 1122, so that the tray plate 1122 is limited up and down. Then the flat wires are arranged on the winding displacement plate 111 one by one by an external mechanical arm.

After winding displacement is completed, the twentieth cylinder 1143 pushes the abutting block 1145 to be close to the second baffle plate 1123, so that the second baffle plate 1123 slides in a direction close to the winding displacement plate 111, and the second baffle plate 1123 regularizes the flat wires. After the regularization is completed, the twentieth cylinder 1143 and the nineteenth cylinder 1142 respectively cancel acting forces on the abutting block 1145 and the compressing block 1141, and the lifting assembly 116 drops, so that the tray plate 1122 can be put back to the wire body. The arranged flat wires may be conveyed under an action of the wire body, thereby implementing coiling of the flat wires.

In this embodiment, the wire body includes a wire body 10 in a material loading region, a wire body 6 in a material feeding region disposed in parallel with the wire body 10 in the material loading region, and a first movable wire body 4 and a second movable wire body 9 that are disposed on left and right ends of the wire body 10 in the material loading region. Bottoms of both the first movable wire body 4 and the second movable wire body 9 are provided with two electric sliding rails disposed in a longitudinal direction. The electric sliding rails are slidably connected to electric sliders on the first movable wire body 4 and the second movable wire body 9, to drive the first movable wire body 4 and the second movable wire body 9 to be aligned with the wire body 10 in the material loading region and the wire body 6 in the material feeding region. The wire body 10 in the material loading region penetrates a material transfer support 21 and is located below a cylinder clamping jaw 22, and the wire coiling mechanism 1 is disposed on a side of the wire body 6 in the material feeding region.

The winding displacement tooling 11 is disposed on the wire body 10 in the material loading region, the wire body 6 in the material feeding region, the first movable wire body 4, and the second movable wire body 9. The wire body 10 in the material loading region, the wire body 6 in the material feeding region, the first movable wire body 4, and the second movable wire body 9 are all disposed in a sliding belt 101 configured to convey the winding displacement tooling 11.

In use, vertical adjustment of the first movable wire body 4 and the second movable wire body 9 is implemented by using the electric sliding rail and the electric slider. When it is required to move the winding displacement tooling 11 on the wire body 10 in the material loading region to the wire body 6 in the material feeding region, the winding displacement tooling 11 on the wire body 10 in the material loading region is received by using the first movable wire body 4. Then the first movable wire body 4 is controlled to move along the longitudinal direction, so that the first movable wire body 4 is aligned with the wire body 6 in the material feeding region. Next, the first movable wire body 4 conveys the winding displacement tooling 11 to the wire body 6 in the material feeding region. When it is required to move the winding displacement tooling 11 on the wire body 6 in the material feeding region to the wire body 10 in the material loading region, the second movable wire body 9 may perform conveying according to a working process of the first movable wire body 4.

In this embodiment, the material loading mechanism 3 includes a second base 33, multiple material loading parts 31 that can generate vibration, and multiple material transfer parts 32. The material loading parts 31 and the material transfer parts 32 are disposed on the second base 33. The material loading parts 31 are tilted up and down, and the material transfer parts 32 are located at low ends of the material loading parts 31. A material holder 35 and two clamping assemblies 34 are disposed on the material transfer part 32, and the material holder 35 is located on a side between the two clamping assemblies 34. The flat wires are hung on the material loading parts 31, and the material loading parts 31 can load the flat wires to the material transfer parts 32 one by one. The material transfer parts 32 can transfer the flat wires to a position between the two clamping assemblies 34. The clamping assemblies 34 clamp the flat wires and drive the flat wires to rotate, so that the flat wires are horizontally placed on the material holder 35.

In use, the flat wires are hung on an open end of the material support rod 314. The material loading parts 31 vibrate, so that the flat wires slide in a direction close to the material transfer parts 32. However, the flat wires do not separate from the material loading parts 31. After material loading is completed, the material loading parts 31 loads and move the flat wires upward one by one and slide toward the material transfer part 32, so that the flat wires are conveyed to the material transfer parts 32 one by one. The material transfer parts 32 drive the flat wires to move upward to a position between the two clamping assemblies 34, and the clamping assemblies 34 clamp the flat wires. In this case, the material transfer parts 32 are reset and receive the flat wires conveyed by the material loading parts 31 again, and the clamping assemblies 34 drive the flat wires to rotate intermittently, so that the flat wires clamped by the clamping assemblies 34 can be horizontally placed on the material holder 35, to implement a material loading process. Then the horizontally placed flat wires are taken away, and subsequent wire inserting is implemented.

After a flat wire is horizontally placed on the material holder 35, the clamping assembly 34 no longer clamps the flat wire and rotates to be reset, and then continues to clamp the other flat wire according to the foregoing process.

In this embodiment, the material loading part 31 includes a base plate 317 fastened to the second base 33 by using a bolt, a base 315 disposed on the base plate 317, a material support rod 314 fastened to the base 315 through a support rod, a material compressing rod 312 disposed above the material support rod 314, a material stopper 3111 fastened to an end of the material support rod 314 by using a bolt, and a material pushing assembly disposed on the base 315. Both ends of a bottom of the base 315 are hinged to the base plate 317, and after being hinged, the two ends of the base 315 are different in height, so that the base 315 is tilted up and down. The material support rod 314 may be fastened to the base 315 by using support rods with a same height, or may be fastened to the base 315 by using support rods with different heights. However, the material support rod 314 fastened to the base 315 by using the support rod is always tilted up and down. In addition, the material stopper 3111 is always located at an end that is of the material support rod 314 and that is tilted downward, the material transfer part 32 is always located on a side that is of the material stopper 3111 and that is away from the material support rod 314, and at least one vibrator 311 is fastened to the material support rod 314 by using a bolt.

A support 316 is fastened on the base 315 by using a bolt. The support 316 is connected to one end of the material compressing rod 312 by using a bolt. A cross rod is mounted on an upper side surface of the support 316 by using a mounting block, and the other end of the cross rod is connected to the other end of the material compressing rod 312 by using a connector. A lower side surface of the material compressing rod 312 is parallel to an upper side surface of the material support rod 314. An interval is provided between the lower side surface of the material compressing rod 312 and the upper side surface of the material support rod 314, and the interval is greater than a diameter of one flat wire and is less than a diameter of two flat wires.

The material pushing assembly can push a flat wire that contacts the material stopper 3111 above the material stopper 3111 and slide over the material stopper 3111 onto the material transfer part 32. An upper side surface of the material stopper 3111 is tilted downward from one end adjacent to material support rod 314 to one end away from the material support rod 314. The material compressing rod 312 is not located above a material pushing assembly.

In use, a flat wire is hung on an end, away from the material stopper 3111, of the material support rod 314. The vibrator 311 continuously vibrates the material support rod 314, so that the flat wire slides in a direction close to the material stopper 3111. When the flat wire moves, the flat wires do not overlap up and down when sliding through an interval between the material compressing rod 312 and the material support rod 314. When the flat wire contacts the material stopper 3111, the material pushing assembly pushes the flat wire that contacts the material stopper 3111 to move above the material stopper 3111, and drops on the material stopper 3111. The flat wire slides on the material transfer part 32 through the material stopper 3111.

In this embodiment, an upper side face of the material support rod 314 is an inverted V-shape, a V-shaped groove is disposed on a lower side surface of the material compressing rod 312. An interval is provided between the V-shaped groove and the inverted V-shaped side surface of the material stopping rod. The interval is greater than a diameter of one flat wire and less than a diameter of two flat wires.

In use, the flat wire is limited by the material support rod 314 with the inverted V-shaped upper surface and the material compressing rod 312 with the V-shaped groove provided on the lower side surface, so that the flat wire cannot wing greatly when the material support rod 314 vibrates.

In this embodiment, the material pushing assembly includes a twelfth cylinder 318 that is fastened to the base 315 by using a bolt and a first top post 3112 connected to the twelfth cylinder 318 through a floating connector. The first top post 3112 and the twelfth cylinder 318 are both perpendicular to the material support rod 314. The material support rod 314 is provided with a through hole through which the first top post 3112 penetrates. The material compressing rod 312 is not located above an upper end of the first top post 3112. When the twelfth cylinder 318 is in an initial state, the first top post 3112 does not protrude onto an upper side surface of the material support rod 314. When the twelfth cylinder 318 is in a material loading state, an upper end of the first top post 3112 is located above an upper side surface of the material stopper 3111.

When the flat wire contacts the material stopper 3111, the twelfth cylinder 318 operates to push the first top post 3112 upward, and the first top post 3112 moves upward to push one flat wire to move to a position above the material stopper 3111. The flat wire falls on the material stopper 3111 with vibration. After the flat wire falls on the slider, the twelfth cylinder 318 resets and drives the first top post 3112 to reset. In this case, the first top post 3112 does not protrude from the upper side surface of a material stopping rod, so that the flat wire can subsequently continue contacting the material stopper 3111.

In this embodiment, a material filling alarm 313 is fastened by using a bolt to one end that is of the material compressing rod 312 that is inclined upward. The material filling alarm 313 is located on both sides of an upper end of the material support rod 314. A material shortage alarm 3110 and a material adding alarm 319 are disposed on both sides of one end that is of the material support rod 314 and that is connected to the material stopper 3111. A horizontal plate is arranged up and down on a side surface of the support 316, and the horizontal plate is provided with a sliding groove. The sliding groove is disposed in a tilting direction of the material support rod 314. Followers are disposed in the two sliding grooves, and the followers are connected to the material shortage alarm 3110 and the material adding alarm 319.

In use, the material shortage alarm 3110 is adjusted by using the sliding groove and the follower, so that a position of a flat wire that contacts the material stopper 3111 is corresponding to a position of the material shortage alarm 3110. Then the material adding alarm 319 is adjusted to a side adjacent to the material stopper 3111. The material filling alarm 313, the material shortage alarm 3110, and the material adding alarm 319 are all correlation optical sensors.

During material loading, firstly, the material support rod 314 is hung with flat wires, and the material filling alarm 313 detects flat wires through correlation, and hanging of a flat wire on the material support rod 314 is stopped. Then, the flat wire is slowly moved to the material transfer part 32. When the flat wires on the material support rod 314 gradually decrease, the material adding alarm 319 does not detect a flat wire through correlation, which indicates that material adding may be performed on the material support rod 314, to prevent affecting subsequent material loading.

When the material shortage alarm 3110 does not detect a flat wire through correlation, it indicates that no flat wire can be loaded on the material support rod 314.

In this embodiment, the material transfer part 32 includes a support base 321, located on one side that is of the material stopper 3111 and that is away from the material support rod 314, a thirteenth cylinder 324 that is fastened to the support base 321 by using a bolt, a slider 323 that is connected to an output shaft of the thirteenth cylinder 324 by using a floating connector, and a material hanging block 322 that is fastened to the slider 323 by using a bolt. The slider 323 is connected to the support base 321 by using a sliding groove and a sliding rail, and the material hanging block 322 is located below the material stopper 3111, so that a flat wire dropping from the material stopper 3111 falls on the material hanging block 322, and both the clamping assembly 34 and the material holder 35 are disposed on the support base 321. The material hanging block 322 can be moved upward to a position between the two clamping assemblies 34, so that the clamping assemblies 34 can clamp the flat wires.

When the flat wire on the material stopper 3111 slides onto the material hanging block 322, the thirteenth cylinder 324 pushes the slider 323 upward, and the slider 323 drives a material hanging block to move the flat wire upward. When the flat wire moves upward to a specific height, the clamping assembly 34 clamps the flat wire, and the material hanging block moves down to an initial position, to prepare for receiving a material next time. The clamping assembly 34 places the clamped flat wire horizontally on the material holder 35, so that the flat wire is moved, and subsequent wire inserting is performed. The specific height in the foregoing content is a height at which two straight line segments of a flat wire are located in the clamping assembly 34 and the clamping assembly 34 can clamp the straight line segments.

In this embodiment, the clamping assembly 34 includes a fifth motor 342 that is fastened to the support base 321 by using a bolt, a connection plate 341 that is connected to an output shaft of the fifth motor 342 by using a flange, a fourteenth cylinder 343 that is fastened to the connection plate 341 by using a bolt, and two wire clamping blocks 344 that are disposed on the fourteenth cylinder 343. The fourteenth cylinder 343 can drive the two wire clamping blocks 344 to move toward each other to clamp the flat wire.

In use, the flat wire moves between the two wire clamping blocks 344. Under an action of the fourteenth cylinder 343, the two wire clamping blocks 344 clamp the flat wire. The fifth motor 342 drives the connection plate 341 to turn over the fourteenth cylinder 343 and the wire clamping block 344, so that the flat wire is horizontally placed on the material holder 35 after being turned over. Then the fourteenth cylinder 343 drives the wire clamping block 344 to loosen the flat wire, and the fifth motor 342 drives the fourteenth cylinder 343 and the wire clamping block 344 to reset.

In this embodiment, the two wire clamping blocks 344 include a connection segment connected to the fourteenth cylinder 343 and a clamping segment located on the connection segment. Opposite side surfaces of the clamping segments of the two wire clamping blocks 344 are vertically provided with V-shaped clamping slots. A side surface that is of one clamping segment and that is provided with the V-shaped clamping slot is provided with a groove connected to a front side surface and rear side surface of the clamping segment, and the other clamping segment can be inserted into the groove. When one of the clamping segments is inserted and connected to the groove and contacts a bottom of the groove, the two V-shaped clamping slots contact the flat wire, to clamp the flat wire.

In use, the flat wire is located between two clamping segments, and the fourteenth cylinder 343 drives, by using the connection segment, the two clamping segments to move toward each other. One clamping segment is inserted and connected to a groove in the other clamping segment. In this case, a straight segment of the flat wire is located in a polygon hole formed by cooperation of two V-shaped slots. Then one of the clamping segments moves continuously into the groove until contacting the bottom of the groove. In a process in which the clamping segment moves, an area of the polygon hole gradually decreases. When the clamping segment contacts the bottom of the groove, slot surfaces of the V-shaped slots of the two clamping segments contact side surfaces of the flat wire, so that when the clamping segment clamps the flat wire, bending of the flat wire is prevented. When the flat wire needs to be released, two clamping segments are controlled to be loosened.

In this embodiment, the material transfer mechanism 2 includes a material transfer support 21, a second sliding plate 24 slidably connected to the material transfer support 21, a fourth motor 25 disposed on the second sliding plate 24, a mechanical swing arm 23 disposed on a lower side surface of the second sliding plate 24, and a cylinder clamping jaw 22 disposed on the mechanical swing arm 23. The cylinder clamping jaw 22 is disposed above the wire body, and a sliding direction of the second sliding plate 24 is the same as a winding displacement direction of the winding displacement tooling 11. A second rack 26 on the material transfer support 21 is disposed on one side of the second sliding plate 24, and a drive gear meshing with the second rack 26 is disposed on the fourth motor 25.

In use, under an action of the mechanical swing arm 23, the cylinder clamping jaw 22 can clamp the flat wire at the material loading mechanism 3. The cylinder clamping jaw 22 places the clamped flat wire in a wire slot of the winding displacement tooling 11. Under actions of the fourth motor 25, the second rack 26, and the drive gear, the mechanical swing arm 23 can move left and right, so that the flat wire is placed in different wire slots of the winding displacement tooling 11.

In this embodiment, the wire coiling mechanism 1 includes a winding mechanism for winding arranged flat wires, a flat wire conveying mechanism, and the wire body 6 in the material feeding region.

The winding mechanism is disposed on a fastening support 110, and the wire body 6 in the material feeding region is disposed below the winding mechanism.

The flat wire conveying mechanism is configured to convey, to the winding mechanism for winding, flat wires arranged on the winding displacement tooling conveyed to the winding mechanism. The flat wire conveying mechanism is disposed on the fastening support 110 and is distributed on both sides of the winding mechanism.

In this embodiment, the arranged flat wires can be conveyed to the winding mechanism for winding through cooperation between the wire body 6 in the material feeding region and the flat wire conveying mechanism.

In this embodiment, the flat wire conveying mechanism includes a cable routing part 13 that can slide in a left-right direction and that is configured to convey a flat wire on the winding displacement tooling to the winding mechanism, and a conducting wire part 14 that can slide in a left-right direction and that is configured to prevent a flat wire winded by the winding mechanism from falling. The cable routing part 13 and the conducting wire part 14 are distributed on a fastening support 110 on both sides of the winding mechanism. The cable routing part 13 includes a wire movement assembly 133 that is configured to convey a flat wire on the winding displacement tooling to the winding mechanism, and the wire movement assembly 133 is driven by a first drive assembly for lifting.

In this embodiment, the cable routing part 13 includes a first assembly base 130, a first cylinder 131, the first drive assembly, and the wire movement assembly 133. The first drive assembly is a second cylinder 132, the first assembly base 130 is a right-angled plate, and the right-angled plate is divided into a longitudinal plate and a horizontal plate. The horizontal plate is slidably disposed on the fastening support 110 on both sides of the winding mechanism in a left-right direction. The first cylinder 131 is firmly connected to the fastening support 110 on one side of the cable routing part 13. An output end of the first cylinder 131 is fastened to the horizontal plate and is configured to push the horizontal plate to move toward or opposite to a side of the winding mechanism. The longitudinal plate is disposed at one end that is of the horizontal plate and that faces the winding mechanism. An upper end of the longitudinal plate is firmly connected to the second cylinder 132 whose output end is downward. The wire movement assembly 133 is firmly connected to the output end of the second cylinder 132, and the wire movement assembly 133 is slidably disposed on the longitudinal plate. It is ensured that the wire movement assembly 133 is moved more stably. The second cylinder 132 can adjust a height position of the wire movement assembly 133 in a vertical direction, to adapt to a position of the winding mechanism and facilitate precise cooperation with the winding mechanism.

In this embodiment, a conducting wire part 14 includes a second assembly base 140, a third cylinder 141, a conducting wire block 142, and a second drive assembly. The second assembly base 140 is a right-angled plate that has a same shape as the first assembly base 130. The second drive assembly is a fourth cylinder 143. A manner in which the second assembly base 140, the third cylinder 141, and the fourth cylinder 143 are disposed is the same as a manner in which the first assembly base 130, the first cylinder 131, and the second cylinder 132 are disposed. However, the conducting wire part 14 and the cable routing part 13 are symmetrically distributed around the winding mechanism, and there are differences. The conducting wire block 142 is firmly connected to an output end of the second cylinder 132, and the conducting wire block 142 is disposed on a longitudinal plate of the second assembly base 140 that has a right-angled plate shape, to ensure that the conducting wire block 142 slides stably. Through cooperation between the third cylinder 141 and the fourth cylinder 143, the conducting wire block 142 can be disposed at an optimal working position of the winding mechanism. A function of the conducting wire block 142 is to prevent a flat wire from falling off when the winding mechanism winds the flat wire, a surface on which the conducting wire block 142 cooperates with the winding mechanism is set to an arc-shaped surface that has a same radian as a rotation track of the winding mechanism, and an upper end of the arc-shaped surface is higher than a horizontal plane of a shaft center of the winding mechanism, so that the arc-shaped surface can be more closely attached to the winding mechanism.

In this embodiment, there are two groups of wire movement assemblies 133. Each group of wire movement assemblies 133 includes a sliding plate 134, two first baffle plates 135, a first motor 136, and a conveying belt 137. A side that is of the first baffle plate 135 and that faces the winding mechanism is also disposed as an arc-shaped surface. The sliding plate 134 is slidably disposed on a horizontal plate of the first assembly base 130 that has a right-angled plate shape. The first motor 136 and the conveying belt 137 are both disposed between the two first baffle plates 135. The first motor 136 drives the conveying belt 137 to move through cooperation of a roller. The conveying belt 137 is tilted as a whole, and one end that is of the conveying belt 137 and that faces the sliding plate 134 is higher than the other end. A transition part between an upper end of the conveying belt 137 and an arc-shaped surface on the first baffle plate 135 is ensured to be flat, thereby better conveying the flat wire.

In this embodiment, a stator wire coiling device further includes a positioning part 17 that is configured to mount the winding mechanism. The positioning part 17 is configured to adjust a position through the winding mechanism. The winding mechanism further includes a wire coiling part 15. The wire coiling part 15 includes a winding assembly 155 that is configured to perform winding on the flat wires, and the wire coiling part 15 is detachably mounted on a mechanical arm. During wire coiling, the mechanical arm places the wire coiling part 15 at a winding position. After wire coiling is completed, the mechanical arm directly transfers the wire coiling part 15 to a corresponding working position in a subsequent flat wire processing process. The winding assembly 155 is driven by a third driving mechanism. An inner diameter and an outer diameter of the winding assembly 155 are variable. The winding assembly 155 includes a sleeve 157 provided with multiple slots 153. Two ends of the sleeve 157 are firmly connected to a connecting cover plate. Each slot 153 is slidably connected to an insert 158 in a height direction of the slot 153. The multiple inserts 158 and the slot 153 are distributed in an annular array, and space for winding flat wires is formed between the two inserts 158. At least two umbrella-shaped members 159 for driving the inserts 158 to slide are slidably disposed in an axial direction of the sleeve 157. The umbrella-shaped members 159 are fastened on a rotating shaft 156 that overlaps an axis of the sleeve 157. One side that is of the insert 158 and that faces the rotating shaft 156 is provided with a sliding groove 1101 inclined at a specific angle. One end that is of the umbrella-shaped member 159 and that has a large opening is firmly connected to an extension rod inserted and connected in the sliding groove 1101. Two ends of the rotating shaft 156 are slidably connected to two connecting cover plates, thereby changing a position of the insert 158 in the slot 153, and further changing an outer diameter of the insert 158.

In this embodiment, the wire coiling part 15 further includes a first mounting base 150, a fifth cylinder 151, a fourth driving mechanism 152, a locking assembly 19, and a sliding base 154. The first mounting base 150 is operated and controlled by the mechanical arm for dismantling and mounting of the wire coiling part 15. The fourth driving mechanism 152 includes a servo motor 1102 and a hollow speed reducer 113. An input shaft of the hollow speed reducer 113 is firmly connected to an output shaft of the servo motor 1102. An output end of the hollow speed reducer 113 is fastened to a connecting cover plate that is of the winding assembly 155 and that faces a side of the fifth cylinder 151, so that the servo motor 1102 can drive, by using the hollow speed reducer 113, the sleeve 157 to rotate.

In this embodiment, the sliding base 154 is slidably connected to a lower end of the first mounting base 150 in a front-back direction. The locking assembly 19 is disposed on the sliding base 154. The locking assembly 19 includes a ninth cylinder 190, a steel ball 191, an adapter 192, and a sliding sleeve 193. The fifth cylinder 151 is firmly connected to a rear end of the first mounting base 150. An output end of the fifth cylinder 151 is fastened to the sliding base 154, and is configured to drive the sliding base 154 to slide back and forth. A central part of the sliding base 154 is firmly connected to the adapter 192. One end of the rotating shaft 156 penetrates the connecting cover plate and is rotatably connected to an inner side surface of the adapter 192, and the other end of the rotating shaft 156 is slidably connected to a hollow barrel. The hollow barrel is fastened to an inner side of a connecting cover plate that is of the sleeve 157 and that is away from the adapter 192, so that the rotating shaft 156 can more stably support the winding assembly 155. The ninth cylinder 190 is firmly connected to the sliding base 154, and the sliding sleeve 193 is sleeved on an outer side of the adapter 192. One end, that is of the sliding sleeve 193 and that is away from the adapter 192, is fastened to an output end of the ninth cylinder 190. Shaft centers of the rotating shaft 156, the sliding sleeve 193, and the adapter 192 are all on a same axis. The adapter 192 penetrates the sliding base 154. The sliding sleeve 193 is sleeved on one end of the adapter 192, and the rotating shaft 156 is inserted into an inner side of the other end of the adapter 192. In this case, it can be ensured that the rotating shaft 156 slides back and forth reciprocatingly in a front-back direction, and the rotating shaft 156 can also rotate along with the sleeve 157, and one side that is of the adapter 192 and that faces one side of the sliding sleeve 193 is movably connected to the steel ball 191. One end that is of the rotating shaft 156 and that faces the sliding sleeve 193 is provided with an annular groove for rolling of the steel ball 191. A rear end of the inner side surface of the sliding sleeve 193 is provided with a mounting protrusion for compressing the steel ball 191, so that the steel ball 191 penetrates the adapter 192 and is inserted into the annular groove at the end of the rotating shaft 156.

With this disposing, when the winding assembly 155 needs to be removed, the ninth cylinder 190 retracts and the sliding sleeve 193 is recovered from the adapter 192. When the rotating shaft 156 is extracted from the adapter 192, most of the steel ball 191 is squeezed into the sliding sleeve 193 through the adapter 192, so that the winding assembly 155 can be quickly dismantled.

In this embodiment, the winding mechanism also includes a wire-holding assembly 18 for tightly holding the winding assembly 155 that has winded the flat wires. The wire-holding assembly 18 includes a first base 180, a first mounting block symmetrically firmly connected to an upper end surface of the first mounting base 150, a tenth cylinder 181 hinged on the first mounting block, a first swing arm 183 rotatably connected to both sides of a bottom of the first base 180, a second swing arm 184 rotatably connected to an end that is of the first swing arm 183 and that is away from the first base 180, a second mounting block firmly connected to the second swing arm 184, an eleventh cylinder 182 hinged on the second mounting block, a driving gear 185, a driven gear 186, and a belt 187. The first base 180 is disposed on a lower end surface of the first mounting base 150.

An output end of the tenth cylinder 181 is rotatably connected to the first swing arm 183. The driving gear 185 is rotatably disposed at an end that is of the first swing arm 183 and that is away from the first base 180. The driven gear 186 is rotatably connected to a hinge position between the first swing arm 183 and the second swing arm 184. A shaft center of the driven gear 186 is the same as a shaft center of the first swing arm 183 and the second swing arm 184. The driving gear 185 and the driven gear 186 are meshed. A connecting post is disposed on the center of a circle that is of a disk of the driving gear 185 in a radial direction away from the driving gear 185. An output end of the eleventh cylinder 182 is rotatably connected to the connecting post. An end of the belt 187 is firmly connected to a side that is of the second swing arm 184 and that is opposite to the center of the winding assembly 155. When the tenth cylinder 181 and the eleventh cylinder 182 drive the first swing arm 183 and the second swing arm 184 to hold the winding assembly 155 tightly, the belt 187 is just wrapped around an outer side surface of the winding assembly 155, to prevent the flat wire from falling off.

In this embodiment, the wire body 6 in the material feeding region further includes a lifting part 16 that can slide in a left-right direction and that is configured to lift the winding displacement tooling 11, and is configured to precisely convey the flat wires on the winding displacement tooling 11 to the winding assembly 155 for winding. The lifting part 16 includes a bottom frame, a sliding rail 160 symmetrically and firmly connected to the bottom frame, a first sliding plate 161 that is slidably connected to the sliding rail 160, a horizontally disposed plate 162 that is slidably disposed on the first sliding plate 161, a positioning rod 163 that is firmly connected to the horizontally disposed plate 162, a first rack 164 that is firmly connected to the bottom frame, a third motor 165 that is firmly connected to the first sliding plate 161, a first gear 166 that is firmly connected to an output shaft of the third motor 165, and a sixth cylinder 167 that is firmly connected to a lower end surface of the first sliding plate 161. An output shaft of the sixth cylinder 167 penetrates the first sliding plate 161 and is configured to drive the horizontally disposed plate 162 to slide upward. The first gear 166 is meshed with the first rack 164, and the third motor 165 is configured to drive the first gear 166 to rotate. With the cooperation of the first gear 166 and the first rack 164, the first sliding plate 161 performs linear reciprocating motion along the sliding rail 160. When the winding displacement tooling 11 slides along the wire body in the material feeding region in a direction close to the wire coiling part 15, the sixth cylinder 167 lifts the horizontally disposed plate 162, so that the positioning rod 163 lifts the winding displacement tooling to be detached from the wire body in the material feeding region. The horizontally disposed plate 162 slides along the sliding rail 160 and approaches the wire coiling part 15. To improve working efficiency, the other top lifting part 16 may continue to convey the winding displacement tooling, and the previous lifting part 16 continues to receive a new winding displacement tooling, to ensure continuous winding.

In this embodiment, a first fastening plate 170 is firmly connected to the fastening support 110 at a front end of the winding assembly 155, a lower end of the first fastening plate 170 is firmly connected to a seventh cylinder 171, and an output end of the seventh cylinder 171 penetrates the first fastening plate 170 and is firmly connected to a transition plate. An eighth cylinder 172 is firmly connected to the transition plate, to adjust an entire height and front-back position of the wire coiling part 15, so that the wire coiling part 15 can be located in a center of the flat wire conveying mechanism, and the winding assembly 155 can better cooperate with an arc-shaped surface on the cable routing part 13 and the conducting wire part 14, thereby effectively preventing the flat wire from falling off. An output end of the eighth cylinder 172 faces the winding assembly 155 and is firmly connected to a movable block 173. One end that is of the movable block 173 and that faces the winding assembly 155 is rotatably connected to an alignment block 174 that is configured to clamp a connecting cover plate that is on a side of the sleeve 157 and that faces the movable block 173. One side that is of the alignment block 174 and that faces the winding assembly 155 is provided with at least two groove bodies. The connecting cover plate on one side that is of the sleeve 157 and that faces the movable block 173 is provided with at least two inserts distributed in a same manner as that for the groove bodies. When the wire coiling part 15 is placed on the fastening support 110, the seventh cylinder 171 lifts the first fastening plate 170, and the eighth cylinder 172 adjusts a position height of the alignment block 174. Then, the eighth cylinder 172 pushes the movable block 173 to approach the wire coiling part 15, so that the groove body is sleeved on the insert, thereby implementing clamping the alignment block 174 and the connecting cover plate. Therefore, the wire coiling part 15 is centered through control of the seventh cylinder 171 and the eighth cylinder 172, to ensure that the wire coiling part 15 is at a correct winding position and ensure a subsequent winding effect. Working principle: First, the flat wires are arranged on the winding displacement tooling by using the mechanical arm, and the winding displacement tooling is conveyed by using the wire body in the material feeding region. After the winding displacement tooling is conveyed to a specific position, the sixth cylinder 167 is extended, to raise the winding displacement tooling. After the winding displacement tooling is raised to a specific position, the third motor 165 is started, to drive the first gear 166 to rotate. With the cooperation of the first rack 164, the first sliding plate 161 drives the lifting part 16 to slide along the sliding rail 160 to a lower end of the winding assembly 155. A position of the winding assembly 155 is adjusted by using the positioning part 17, the conducting wire part 14, and the cable routing part 13, so that the insert 158 in the winding assembly 155 can be attached to the arc-shaped surfaced. Then, the first motor 136 in the cable routing part 13 starts working, and the servo motor 1102 is also started, so that the conveying belt 137 drives the flat wire to be conveyed to the winding assembly 155, and the winding assembly 155 winds the flat wire. After the arc-shaped surface is disposed and the winding assembly 155 performs winding in one circle, the flat wire does not fall off from a gap between two inserts 158, and the wire-holding assembly 18 is started, so that the tenth cylinder 181 is extended to drive the first swing arm 183 to rotate, and the eleventh cylinder 182 performs a reciprocating and retracting action, so that the eleventh cylinder 182 drives the driving gear 185 to rotate, the driving gear 185 drives the driven gear 186 to rotate, and the second swing arm 184 is rotated. In addition, the belt 187 is winded on an outer side of the winding assembly 155, to further prevent the flat wire from falling off. After the holding is completed, the mechanical arm directly transfers the wire coiling part 15 to a wire inserting position during stator processing, the wire-holding assembly 18 is loosened, so that a winded flat wire is inserted into a winding displacement tooling in a corresponding wire inserting position, and then the other mechanical replaces the wire coiling part 15 with a next wire coiling part 15.

When the wire coiling part 15 is replaced with a next wire coiling part 15, the other mechanical arm operates and controls a side that is of the wire coiling part 15 and that faces a side of the positioning part 17 to be inserted into the alignment block 174, to complete mounting of the wire coiling part 15. Then, a height and a position in a front-back direction of the wire coiling part 15 are respectively adjusted by using the seventh cylinder 171 and the eighth cylinder 172, to facilitate cooperation between the winding assembly 155, the cable routing part 13, the conducting wire part 14, the lifting part 16, and the winding displacement tooling. The two mechanical arms work alternately, and the wire coiling part 15 does not need to be frequently replaced. When a position of the insert 158 in the slot 153 is adjusted, the fifth cylinder 151 is controlled to extend and retract, to push the sliding base 154 to slide along the first mounting base 150, so that the first mounting base 150 drives the adapter 192 to slide. Further, the adapter 192 drives the rotating shaft 156 to slide, so that the rotating shaft 156 drives the umbrella-shaped member 159 to slide, to adjust a length of the extension rod in the sliding groove 1101, and further adjust a position of the insert 158 in the slot 153, thereby changing an outer diameter of the winding assembly 155.

In this embodiment, the wire inserting mechanism 7 includes a workbench 71, a movable plate 72 that can be lifted and lowered on the workbench 71, a press-in assembly 73 disposed on the movable plate 72, and a positioning assembly 76 and a detaching assembly 75 located above the workbench 71. Both the positioning assembly 76 and the detaching assembly 75 are located below the press-in assembly 73. The detaching assembly 75 is disposed coaxially with the positioning assembly 76. A winding on the wire coiling mechanism 1 penetrates the press-in assembly 73 and is inserted into the detaching assembly 75. When the winding is detached from the wire coiling mechanism 1, the press-in assembly 73 presses the winding into the detaching assembly 75, the detaching assembly 75 moves upward, so that the positioning assembly 76 can position the winding, and then the detaching assembly 75 moves downward, so that the winding is detached from the detaching assembly 75.

The press-in assembly 73 includes a sixteenth cylinder 732 and a fifteenth cylinder 731 that are disposed on the movable plate 72, and a first compressing plate 733 and a second compressing plate 734 that are slidably disposed on the movable plate 72. The first compressing plate 733 and the second compressing plate 734 are respectively connected to the sixteenth cylinder 732 and the fifteenth cylinder 731, to push the first compressing plate 733 and the second compressing plate 734 to move toward each other. The movable plate 72 is slidably disposed on the workbench 71, and the movable plate 72 is provided with a synchronous lifter 74 that is located on the workbench 71.

The positioning assembly 76 includes a movable support 761 disposed on the workbench 71, a fastening tray 769 on the movable support 761, a rotating plate 764 rotatably disposed on the fastening tray 769, gear teeth 766 circularly arrayed on an upper side surface of the rotating plate 764 with a shaft center of the rotating plate 764 as the center of a circle, and a cover plate 768 disposed above the rotating plate 764. The fastening tray 769 is connected to an eighteenth cylinder 767 on the workbench 71. The rotating plate 764, the cover plate 768, and the fastening tray 769 are coaxially disposed, and are provided with through holes through which the detaching assembly 75 penetrates.

A third rack 765 is disposed on a circumferential side surface of the rotating plate 764. The third rack 765 meshes with a gear 763. The gear 763 is connected to a second motor 762 located on the fastening tray 769. Arc-shaped sliding grooves 760 whose quantity is the same as a quantity of the gear teeth 766 are disposed on a side surface of the rotating plate 764. The arc-shaped sliding grooves 760 are circularly arrayed on the rotating plate 764 with the shaft center of the rotating plate 764 as the center of a circle, and the gear teeth 766 are slidably connected to an inside of the arc-shaped sliding groove 760.

A lower side surface of the cover plate 768 is provided with multiple grooves that cooperate with the gear teeth 766 one by one, and the cover plate 768 is fastened to the fastening tray 769.

The detaching assembly 75 includes a movable wire inserting tray 751, a positioning workpiece 754 disposed below the movable wire inserting tray 751, a second fastening plate 752 located below the positioning workpiece 754, a second top rod 755 slidably penetrating the positioning workpiece 754 and connected to the movable wire inserting tray 751, a first top rod 756 penetrating the second fastening plate 752 and connected to the second top rod 755, and a seventeenth cylinder 753 connected to the first top rod 756. The seventeenth cylinder 753 is connected to the second fastening plate 752, the second fastening plate 752 is connected to the positioning workpiece 754, and the positioning workpiece 754 is connected to the workbench 71. In use, during wire inserting, the synchronous lifter 74 moves the press-in assembly 73 upward, so that the winding is located below the press-in assembly 73. Under actions of the sixteenth cylinder 732 and the fifteenth cylinder 731, the first compressing plate 733 and the second compressing plate 734 are away from each other. The mechanical arm 8 transfers the wire coiling mechanism 1 that has winded flat wires to a position above the wire inserting mechanism 7, so that the winding is aligned with a wire inserting inlet of the detaching assembly 75.

Then, under the action of the eighteenth cylinder 767, the positioning assembly 76 enables the gear teeth 766 to surround an inlet of a movable wire inserting tray 751, and the inserts of the wire coiling mechanism 1 retract, so that the winded flat wire slowly falls into the movable wire inserting tray 751. After a lower end of a winded copper wire is inserted into the wire inserting tray 751, the sixteenth cylinder 732 and the fifteenth cylinder 731 drive the first compressing plate 733 and the second compressing plate 734 to approach each other and lower the press-in assembly 73 under the action of the synchronous lifter 74, and press the loosened winding of the wire coiling mechanism 1 into the detaching assembly 75.

The positioning assembly 76 returns to an initial position under the action of the eighteenth cylinder 767.

The seventeenth cylinder 753 drives the first top rod 756 upward, so that the second top rod 755 moves upward, the movable wire inserting tray 751 lifts the winding. When the winding is lifted to a specific height, the second motor 762 drives the gear 763 to rotate, so that the rotating plate 764 rotates, the gear teeth 766 slide along the arc-shaped sliding groove 760 on the rotating plate 764. Through cooperation of the gear teeth 766 and the positioning workpiece, the gear teeth 766 clamp a lower end of the winding. Then the seventeenth cylinder 753 pushes the movable wire inserting tray 751 downward, so that the entire winding is detached from the detaching assembly 75.

Finally, a leaked winding is held by an external mechanism, the gear teeth 766 are loosened, and the winding is held and entirely inserted into an inner part of a stator. In this embodiment, a camera detection mechanism 5 is further disposed on the wire body 6 in the material feeding region, and the camera detection mechanism 5 is specifically a camera. In use, a person checks whether a wire body on each winding displacement assembly 11 is correctly arranged by viewing a picture shot by the camera. If layout is incorrect, the layout is manually adjusted.

Although the present invention is described in detail with reference to the foregoing embodiments, a person skilled in the art may still modify the technical solutions described in the foregoing embodiments, or perform equivalent replacement on some of the technical features. Any modification, equivalent replacement, improvement, or the like performed within the spirit and principles of the present invention shall fall within the protection scope of the present invention as claimed.

## Claims

1. An automatic wire inserting device for producing a flat wire stator, **characterized by** comprising:
a winding displacement tooling (11), configured for winding displacement of flat wires;
a material loading mechanism (3), configured to load the flat wires one by one;
a material transfer mechanism (2), configured to clamp the flat wires loaded by the material loading mechanism (3) one by one, and arrange the flat wires on the winding displacement tooling (11) one by one;
two wire coiling mechanisms (1), configured to wind the flat wires on the winding displacement tooling (11) into windings;
a wire body, configured to drive the winding displacement tooling (11) to circularly move between a wire coiling mechanism (1) and the material transfer mechanism (2), to convey the winding displacement tooling (11) on which the flat wires are arranged to the wire coiling mechanism (1), and move the winding displacement tooling (11) on which winding of the flat wires are completed by using the wire coiling mechanism (1) to the material transfer mechanism (2);
a wire inserting mechanism (7), configured to shape a winding that is detached from the wire coiling mechanism (1) and eject shaped winding to be inserted into a stator; and
two mechanical arms (8), configured to move the two wire coiling mechanisms (1) alternately to the wire inserting mechanism (7), insert a winding on the wire coiling mechanism (1) into the wire inserting mechanism (7), whereby the mechanical arm (8) restores the wire coiling mechanism (1) to a side of the wire body after the winding is detached, so that the wire coiling mechanism (1) is capable of rewinding the flat wires.

2. The automatic wire inserting device for producing a flat wire stator according to claim 1, **characterized in that** the winding displacement tooling (11) comprises a tray plate (1122) and a winding displacement plate (111) disposed on an upper side of the tray plate (1122) and configured to place multiple flat wires, both sides of the winding displacement plate (111) being provided with a second baffle plate (1123) slidably connected to the tray plate (1122), and a side, that is of the second baffle plate (1123) and that is opposite to the winding displacement plate (111), being provided with a twentieth cylinder (1143), wherein the twentieth cylinder (1143) is capable of driving the second baffle plate (1123) to move toward the winding displacement plate (111), to align the flat wires.

3. The automatic wire inserting device for producing a flat wire stator according to claim 2, **characterized in that** the material loading mechanism (3) comprises multiple material loading parts (31) that can generate vibration, and multiple material transfer parts (32), the material loading parts (31) being tilted up and down, and the material transfer parts (32) being located on a side on which the material loading parts (31) are tilted downward in a tilting direction, wherein a material holder (35) and two clamping assemblies (34) are disposed on the material transfer part (32), and the material holder (35) is located on a side between the two clamping assemblies (34), the flat wires are hung on the material loading parts (31), and the material loading parts (31) are capable of loading the flat wires to the material transfer parts (32) one by one, the material transfer parts (32) being capable of transferring the flat wires to a position between the two clamping assemblies (34), whereby the clamping assemblies (34) clamp the flat wires and drive the flat wires to rotate, so that the flat wires are horizontally placed on the material holder (35).

4. The automatic wire inserting device for producing a flat wire stator according to claim 1, **characterized in that** the material transfer mechanism (2) comprises a material transfer support (21), a second sliding plate (24) slidably connected to the material transfer support (21), a fourth motor (25) disposed on the second sliding plate (24), a mechanical swing arm (23) disposed on a lower side surface of the second sliding plate (24), and a cylinder clamping jaw (22) disposed on the mechanical swing arm (23), the cylinder clamping jaw (22) being disposed above the wire body, a sliding direction of the second sliding plate (24) being the same as a winding displacement direction of the winding displacement tooling (11), a second rack (26) on the material transfer support (21) being disposed on one side of the second sliding plate (24), and a drive gear meshing with the second rack (26) being disposed on the fourth motor (25).

5. The automatic wire inserting device for producing a flat wire stator according to claim 1, **characterized in that** the wire coiling mechanism (1) comprises a winding mechanism and a flat wire conveying mechanism;
wherein the wire body conveys the winding displacement tooling (11) to the winding mechanism; and
the flat wire conveying mechanism is configured to convey, to the winding mechanism for winding, flat wires arranged on the winding displacement tooling (11) conveyed to the winding mechanism.

6. The automatic wire inserting device for producing a flat wire stator according to claim 1, **characterized in that** the wire body comprises a wire body (10) in a material loading region, a wire body (6) in a material feeding region disposed in parallel with the wire body (10) in the material loading region, and a first movable wire body (4) and a second movable wire body (9) that are disposed on left and right ends of the wire body (10) in the material loading region, bottoms of both the first movable wire body (4) and the second movable wire body (9) being provided with sliding assemblies that slide in a longitudinal direction, to drive the first movable wire body (4) and the second movable wire body (9) to be aligned with the wire body (10) in the material loading region and the wire body (6) in the material feeding region;
wherein the wire body (10) in the material loading region penetrates a material transfer support (21) and is located below a cylinder clamping jaw (22), and the wire coiling mechanism (1) is disposed on a side of the wire body (6) in the material feeding region; and
the winding displacement tooling (11) is disposed on the wire body (10) in the material loading region, on the wire body (6) in the material feeding region, on the first movable wire body (4), and on the second movable wire body (9).

7. The automatic wire inserting device for producing a flat wire stator according to claim 1, **characterized in that** the wire inserting mechanism (7) comprises a workbench (71), a movable plate (72) that is capable of being lifted and lowered on the workbench (71), a press-in assembly (73) disposed on the movable plate (72), and a positioning assembly (76) and a detaching assembly (75) that are located above the workbench (71), both the positioning assembly (76) and the detaching assembly (75) being located below the press-in assembly (73), the detaching assembly (75) being disposed coaxially with the positioning assembly (76), wherein a winding on the wire coiling mechanism (1) penetrates the press-in assembly (73) and is inserted into the detaching assembly (75), whereby, when the winding is detached from the wire coiling mechanism (1), the press-in assembly (73) presses the winding into the detaching assembly (75), the detaching assembly (75) moves upward, so that the positioning assembly (76) is capable of positioning the winding, and then the detaching assembly (75) moves downward, so that the winding is detached from the detaching assembly (75).

8. The automatic wire inserting device for producing a flat wire stator according to claim 7, **characterized in that** the press-in assembly (73) comprises a sixteenth cylinder (732) and a fifteenth cylinder (731) that are disposed on the movable plate (72), and a first compressing plate (733) and a second compressing plate (734) that are slidably disposed on the movable plate (72), the first compressing plate (733) and the second compressing plate (734) being respectively connected to the sixteenth cylinder (732) and the fifteenth cylinder (731), to drive the first compressing plate (733) and the second compressing plate (734) to move toward each other or away from each other, the movable plate (72) being slidably disposed on the workbench (71), and the movable plate (72) being provided with a synchronous lifter (74) that is disposed on the workbench (71).

9. The automatic wire inserting device for producing a flat wire stator according to claim 8, **characterized in that** the positioning assembly (76) comprises a movable support (761) disposed on the workbench (71), a fastening tray (769) on the movable support (761), a rotating plate (764) rotatably disposed on the fastening tray (769), gear teeth (766) circularly arrayed on an upper side surface of the rotating plate (764) with a shaft center of the rotating plate (764) as the center of a circle, and a cover plate (768) disposed above the rotating plate (764), the fastening tray (769) being connected to an eighteenth cylinder (767) on the workbench (71), the rotating plate (764), the cover plate (768), and the fastening tray (769) being coaxially disposed, and being provided with through holes through which the detaching assembly (75) penetrates;
wherein a third rack (765) is disposed on a circumferential side surface of the rotating plate (764), the third rack (765) meshes with a gear (763), the gear (763) is connected to a second motor (762) located on the fastening tray (769), arc-shaped sliding grooves (760) whose quantity is the same as a quantity of the gear teeth (766) are disposed on an upper side surface of the rotating plate (764), the arc-shaped sliding grooves (760) are circularly arrayed on the rotating plate (764) with the shaft center of the rotating plate (764) as the center of a circle, and the gear teeth (766) are slidably connected to an inside of the arc-shaped sliding groove (760); and
a lower side surface of the cover plate (768) is provided with multiple grooves that cooperate with the gear teeth (766) one by one, and the cover plate (768) is fastened to the fastening tray (769).

10. The automatic wire inserting device for producing a flat wire stator according to claim 9, **characterized in that** the detaching assembly (75) comprises a movable wire inserting tray (751), a positioning workpiece (754) disposed below the movable wire inserting tray (751), a second fastening plate (752) located below the positioning workpiece (754), a second top rod (755) slidably penetrating the positioning workpiece (754) and connected to the movable wire inserting tray (751), a first top rod (756) penetrating the second fastening plate (752) and connected to the second top rod (755), and a seventeenth cylinder (753) connected to the first top rod (756), the seventeenth cylinder (753) being connected to the second fastening plate (752), the second fastening plate (752) being connected to the positioning workpiece (754), and the positioning workpiece (754) being connected to the workbench (71).
